(19) Europäisches Patentamt
European Patent Office
Office européen des brevets

(11) **EP 4 586 164 A1**

(12) **EUROPEAN PATENT APPLICATION**

(43) Date of publication:
**16.07.2025 Bulletin 2025/29**

(51) International Patent Classification (IPC):
**G06Q 10/067** (2023.01)

(21) Application number: **24151782.0**

(22) Date of filing: **15.01.2024**

(52) Cooperative Patent Classification (CPC):
**G06Q 10/067**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Siemens Aktiengesellschaft**
**80333 München (DE)**

(72) Inventors:
• **Carroll, Patrick**
  **76131 Karlsruhe (DE)**
• **Jergler, Martin**
  **85567 Pienzenau (DE)**

(74) Representative: **Siemens Patent Attorneys**
**Postfach 22 16 34**
**80506 München (DE)**

(54) **METHOD AND SYSTEM FOR INTELLIGENT LINKING OF DATA ASSOCIATED WITH AN ASSET**

(57)     What is proposed is a method and respective system for intelligent linking of data associated with an asset. After receiving unlinked asset data sets of different asset data aspects from different source systems, linking recommendations are generated, which are based on asset data aspect similarities, which are calculated after an analysis of properties of the asset data aspects. Similar asset data aspects are grouped, and each asset data aspect of a group is assigned to a unique linked asset identifier thus producing a recommendation that maps each linked asset data aspect to all related asset data aspects. The generated linking recommendations are output for inspection based on expert knowledge, and for approval or modification of the linking recommendation by erasing or adding asset data aspects. In a last step a final linking result with linked asset identifiers is released as basis for generation of a combined asset representation for integration into a sink system.

FIG 2

**Description**

The present disclosure relates to a method and system for intelligent linking of data associated with an asset preferably of an industrial facility. Furthermore, the present disclosure is directed to a respective computer program product.

In the environment of process industry or factory automation, software solutions to access, contextualize and semantically enrich data coming from different sources are often used to manage industrial assets of a technical plant more efficiently, reduce costs, and improve reliability and sustainability. Such software solutions mostly correspond to platforms or ecosystems like a suite of tools and applications that provide a comprehensive view of the assets of an industrial facility or plant. Often, they are based on the Industrial Internet of Things (IIoT) and use means to collect data and analytics and machine learning to analyze data from various sources.

Assets of an industrial facility or plant (an industrial asset) refers to a physical or tangible resource that is utilized within the industrial sector for manufacturing, production, process industry or other industrial processes. These assets are integral to the operations of industrial businesses and play a crucial role in the creation of goods and services. Industrial assets can encompass a wide range of items, including machinery, equipment, or devices such as valves, pumps, motors, controllers, sensors, actuators, etc., but also vehicles, transport equipment, raw materials or even real estate.

Industrial assets typically undergo a lifecycle with several phases over the time. For a process plant for example there is an engineering phase, where the process plant is planned such that the desired production requirements are met. A plant diagram that consists of all relevant asset types, their physical and functional dependencies (e.g., predecessor / successor assets) and their equipment specifications are created. Tags or identifiers to identify the assets in the plant diagram are assigned. In the operations phase, the assets execute the actual production process. Specific control software orchestrates the individual assets and records production/diagnostic information (e.g., temperature, wear KPIs) about the asset's condition. In this phase each asset may be represented by one or more identifiers in a process control system software. In the maintenance phase, individual assets are maintained, replaced, or relocated by service personnel according to service plans or routine intervals. Again, different tags or identifiers may be assigned to assets, depending on the task to be performed during this phase.

Each of the plant lifecycle phases is supported by a dedicated software system that manages associated business logic and data (e.g., engineering tools, control software, automation systems, maintenance planning systems) based on a local representation of a physical asset. Typically, these software systems do not share common identifiers or tags across local asset data of each system. In other words, an asset with a specific tag in the engineering system may have a different tag in the control software or the maintenance planning system. For many use cases, however, a full description of an asset's data as it originates from the individual source systems and tools is needed, for example, to perform root cause analysis in failure scenarios or predictive maintenance.

Synchronizing asset data of different source systems might be one approach to bring different data representations together and to integrate the dependencies between individual assets. But synchronizing data from their source systems to a target system is often not sufficient because the individual asset data aspects are not linked and thus cannot be set into an integrated context. Consequently, there must be a linking between the asset data: Source systems do not share common tags or identifiers for local representations of the same real-world asset, but data must be linked to provide integrated decision support and a holistic view of the asset.

Linking two data sets that belong to the same real-world entity but do not share a common identifier is difficult and requires domain knowledge and other off-band information to establish a correct relationship. In data analytics applications such linking is often established manually and therefore cumbersome. Additionally linking is often used ad-hoc to answer a certain query. This means that the linking relation is established only for the sake of a single task and is not made generally applicable for different data tasks.

Thus, there is a requirement to reduce the effort of manual linking and to make linking of diverse local representations of an asset more intuitive and generalized for the whole industrial facility's context.

An objective of the present invention is to facilitate and automate the linking process by intelligently guiding a user to easily find the right linking of data associated with an asset, the data originating from different source systems.

This objective is achieved by a computer-implemented method for intelligent linking of data associated with an asset according to claim 1. Furthermore, the problem is solved by a respective system according to claim 6 and a respective computer program product according to claim 12. Advantageous aspects of the invention are the subject of the dependent claims.

An asset - as a human being perceives it - will be defined in the following as a real-world asset. However, such a real- world asset, is represented in each software system from a certain perspective or aspect, which is valid only in the respective software system (local representation of an asset). Thus, the fraction of the overall information about an asset, that is available only in a single software system, will be called an asset data aspect. In the context of a process plant for example there might be asset data aspects of the engineering system, the automation system, or the maintenance system, i.e., separate source-specific fractions of information about an asset. An asset data aspect in this context is represented by a specific dataset that comes from a specific data source and contains specific data attributes about the asset.

According to the invention, a method and a respective system for intelligent linking of data associated with an asset are proposed. After receiving unlinked asset data of different asset data aspects from different source systems, linking recommendations are generated, which are based on asset data aspect similarities, which are calculated after an analysis of properties of the asset data aspects. Similar asset data aspects are grouped, and each asset data aspect of a group is assigned to a unique linked asset identifier thus producing a recommendation that maps each linked asset data aspect to all related asset data aspects. The generated linking recommendations are output for inspection based on expert knowledge, and for approval/denying or modification of the linking recommendation by erasing or adding asset data aspects. In a last step a final linking result with linked asset identifiers is released as basis for generation of a combined asset representation for integration into a sink system.

The invention proposes a general and automated solution to link data of different source systems. It has the advantage to make the linking process easier and more efficient because a linking recommendation is provided which can be inspected in a second step. This way, the linking will also become more reliable. Because asset data aspects and combined asset representations are physically integrated in a dedicated sink system, the linking results can be leveraged by multiple consuming applications such as analytics engines.

In a very advantageous embodiment, the linking recommendations are output on a graphical user interface, and a technical expert can select, approve, deny or modify the recommendations, so that a verified final linking recommendation can be obtained. Thus, the invention may be implemented as a tool, that supports a user intelligently and user-friendly in the linking process of asset data. Linking suggestions of asset data are presented to the user for example as a list in a graphical user interface, and the user modifies the list according to the expert knowledge by agreeing upon a linking recommendation as presented in the list, denying a linking recommendation, or deleting, substituting or adding another linking recommendation in the list. Thus, the user may interactively evaluate the linking recommendations based on the presented list or graphical presentation. The invention facilitates the decision of the user and by providing the best linking, the user gives feedback to the system which learns continuously to improve its functionality. By improving the linking process of asset data, individual asset data aspects are linked and can be set into an integrated context, which finally leads to a better performance of the system, the asset is part of. All in all, the efficiency of the formerly manual linkings is highly increased by the inventive semi-automatic linking approach according to this embodiment.

However, there might be use cases, where an expert user is not available to inspect the linking recommendations, or the role of the expert is not requested. In those cases, a logic or artificial intelligence can be configured to review the recommendations. As an example, a neural network would get the asset data aspects together with the calculated linking recommendations as input and would generate a verified linking recommendation as output. In this case the neural network is configured to either accept or deny a linking recommendation. In this embodiment a partly automated approach can be implemented and a user who would inspect the linking recommendations, which were evaluated by the artificial intelligence, would only have to modify a linking recommendation, if necessary, at all.

In another embodiment, the generation of the linking recommendation may be executed fully automatic based on a neural network which is trained for calculating similarities across different asset data aspects, grouping similar asset data aspects and assigning each asset data aspect of a group to a unique linked asset identifier. This might lead to an even higher reliability. Reliability in this sense means that the detected similarities, and thus the provided recommendations can be assumed to be correct for the majority of the combined asset representations (e.g., greater than 99.9%).

The asset data might not always be related to a real-world asset. The inventive method or system may also be applied to virtual assets as digital representations, which are provided by a digital twin of the asset or to combinations of real-world and virtual assets. Since a digital twin is a virtual representation of a physical object like a device or another asset, it can include all phases of the product life cycle of an asset, such as design, manufacturing, operation and service phases. When the invention is applied to a virtual asset, the linking suggestions can be used to improve data analytics on the real and/or virtual asset data. Thus, the linking will have a positive impact on what would happen if changes were made in the real world.

Features of examples of the present disclosure will become apparent by reference to the following description of an exemplary embodiment of the invention.

Thus, the invention is explained below using examples with reference to the figures, in which:

Figure 1    illustrates a block diagram of an exemplary system with unlinked asset data of different asset data aspects from different source systems.

Figure 2    shows an exemplary embodiment of the inventive system.

Figure 3    illustrates a flow chart of a method for intelligent linking of data associated with an asset in accordance with an exemplary embodiment of the present disclosure.

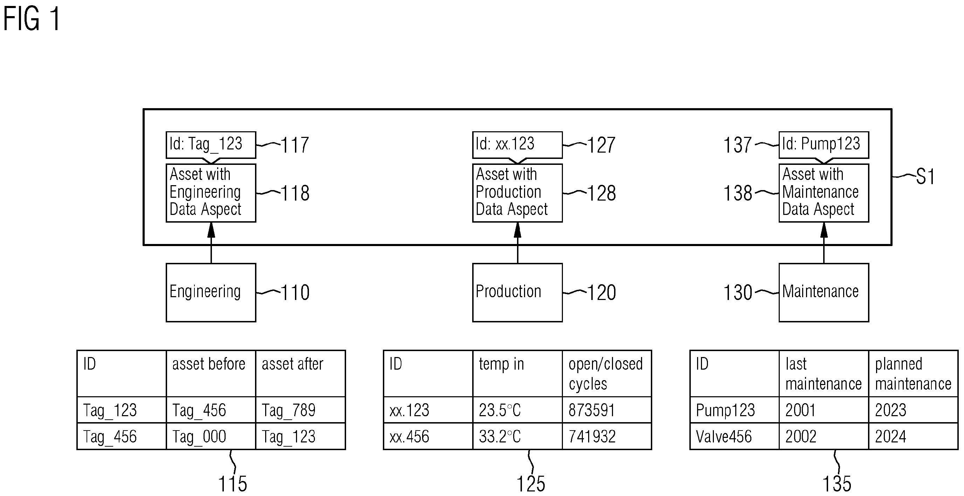

Figure 1 illustrates a block diagram of an exemplary software system S1 with unlinked asset data of different asset data aspects from different source systems. The term "system" refers to a computer-related entity or an entity related to, or part of, an operational apparatus with one or more specific functionalities, wherein such entities can be either hardware, a combination of hardware and software, software, or software in execution. In an industrial environment the system S1 can be any system, like an automation system, which supports an operator of an industrial facility to operate a technical plant like a power plant or a chemical plant. It also might be any cyper-physical system or information system like an enterprise system, business intelligence system, a transaction processing system or an enterprise resource planning system or the like. In the example shown in Fig. 1 the system S1 may also be a decision support system in the industrial context. System S1 is connected to other software systems or tools which serve as data sources of system S1. In this embodiment there are three different data source systems: An engineering system 110, a production system 120 and a maintenance system 130. Each source system manages associated business logic and data based on its local representation of an asset. In order to reach a certain comparability, the data from the source systems should be synchronized. However, only synchronizing data from their source systems to the sink system S1 is not sufficient because the individual asset data aspects are not linked and thus cannot be set into an integrated context. The term "asset data aspect" of this application refers to a fraction of the overall information that is available from a single source system about an asset. This information may be presented by data attributes of an asset data set. The information about an asset (for example a field device) in this embodiment comprises an asset identifier and additional data attributes. An asset identifier is one data attribute of an asset data aspect and can be a text or number that is used to identify an asset in its source system, e.g., an identifier number, a tag name, a key in a database, or a serial number. Those asset identifiers differ in each source system. They might even be connected to a certain state of the asset in this system. Additional data attributes can also be text or number data with source specific characteristics of an asset.

In the engineering system 110 for example there might be different asset identifiers before and after the engineering, as shown in table 115 of Fig. 1. Different asset identifiers (IDs) can be synchronized for further processing (like Tag_123 and Tag_456). Finally, the synchronized asset identifier 117 (Tag_123 as example) belongs to an asset with an engineering data aspect. Thus, the asset data aspect 118 is an engineering source specific data set, which comprises the asset identifier 117 and optionally other data attributes related to the engineering system (which are not shown in the figure). Table 125 of Fig. 1 shows different asset identifiers of a production system 120. The asset identifier xx. 123 might refer to an input temperature of a cooling cycle and might also be correlated to a number of open and closed production cycles. Thus, the ID xx.123 represents a synchronized asset identifier 127 for a real-world asset with production data aspects (here the input temperature of a cycle and the number of production cycles). The asset data aspect 128 therefore comprises the synchronized asset identifier 127 and optionally other production specific data attributes. Table 135 of Fig. 1 shows different asset identifiers of a maintenance system 130. The asset identifier Pump123 might refer to a year of the last maintenance and might also be correlated to a year of a planned maintenance. Thus, the ID Pump123 represents a synchronized asset identifier 137 for a real-world asset with maintenance data aspects (here the years of last and next maintenance). The asset data aspect 138 therefore comprises the synchronized asset identifier 137 and optionally other maintenance specific data attributes. A real-world asset shall be defined as an asset as a human being perceives it, which can be described, among others, by many different asset data aspects. The goal of linking asset data aspects is to get as close as possible to describing the real-world asset.

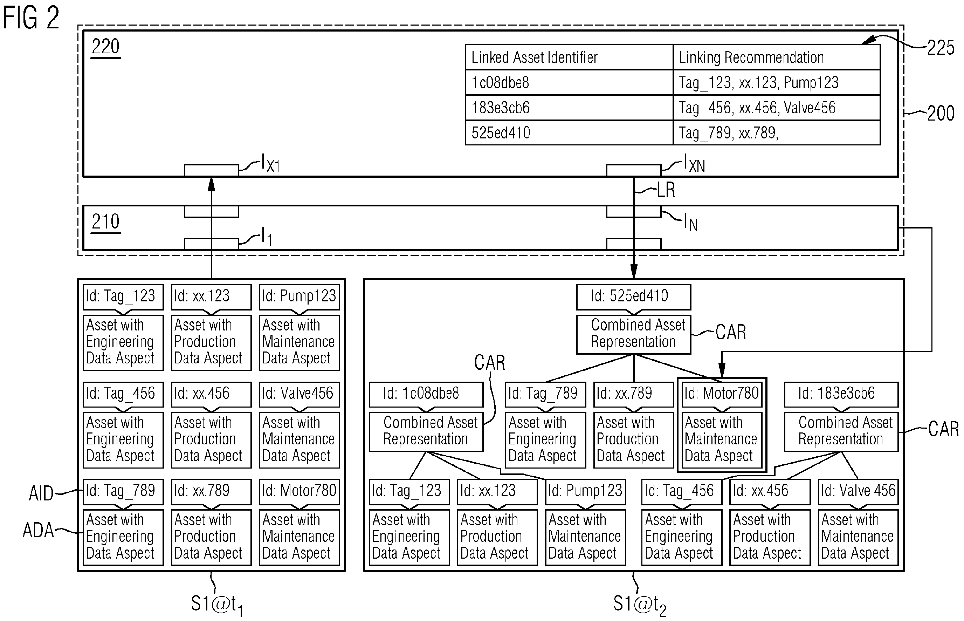

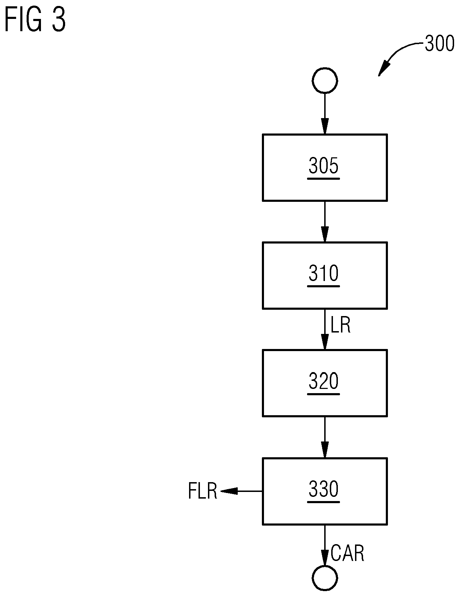

Figure 2 illustrates a system 200 in accordance with an exemplary embodiment of the present disclosure. The objective of the present patent application is also achieved by a computer-implemented method for intelligent linking of data associated with an asset. A flowchart of the inventive method 300 in accordance with an exemplary embodiment of the present disclosure is shown in Fig. 3. The steps of the method shown in the flowchart are incorporated into the following disclosure of the system:

System 200 could be implemented for example as an application server or an application software running on a respective server, being connected to a client unit with a graphical user interface (not illustrated). In this embodiment system 200 is communicatively coupled to another system S1 which itself can be connected to several source systems (as shown in Fig. 1). Communication between the systems S1 and 200 includes, but is not limited to, the exchange of data and information. In the embodiment shown in Fig. 2, system 200 may be intended for implementation in an asset monitoring or asset analyzation system or software ecosystem to support a larger software application in the environment of process industry or factory automation. In a software implementation, the inventive system can be realized as a standalone program or as an integrated component within the context of a larger functional enterprise application. The software for implementing the inventive system can be installed, compiled, and executed in a variety of devices including personal computers, servers with various operating systems, portable computing devices, or other software computing implementation means not mentioned herein. Furthermore, the inventive system may be deployed as Software as a service (SaaS). A SaaS is software that is owned, delivered and managed remotely by one or more providers. The provider delivers software based on one set of common code and data definitions that is consumed in a one-to-many model by all contracted customers at any time on a pay-for-use basis or as a subscription based on use metrics.

There may be several deployment modes for the system depending on the use case. A deployment of the system on a cloud network is advantageous if an on-demand availability of data, storage and general computing resources are required, with functions distributed over multiple cloud server locations. A deployment of the system to an edge may be an optimal scenario when data processing is required close to a technical plant.

System 200 in this embodiment comprises preferably several software modules but is not limited to the shown implementation and design, since all functions of the modules may be implemented in an equivalent way within one module or within a setting with a plurality of modules. Thus, system 200 comprises at least a linking engine 210 and a recommendation engine 220, each engine comprising interfaces $I_1, ... I_N$ or $I_{x1}, ... I_{xN}$ to exchange data and/or information. System 200 may also comprise further interfaces (not illustrated) to exchange data and/or information with further systems. All interfaces may also be realized as application programming interfaces APIs.

In the shown embodiment the linking engine 210 comprises an interface $I_1$ to a software system S1 with asset data sets of different asset data aspects from different source systems. At a first timestamp t1, system S1 contains a collection of unlinked, but synchronized, asset data aspects ADA, each comprising an asset identifier AID and further data attributes which are characteristic for the respective asset data aspect. Those asset data may serve as input data to system 200 or the linking engine 210.

In accordance with the disclosure of Fig. 2, step 305 of the computer-implemented method for intelligent linking of data associated with an asset of Fig. 3 comprises the acquisition or receipt of the unlinked input data, i.e., the asset data sets of different asset data aspects from different source systems.

In Fig. 2, the state of the unlinked asset data aspects ADA of system S1 is shown at a timestamp t1 (S1@t1). To initiate a run of the linking algorithm, system 200 or the linking engine 210 may request the asset data sets from system S1 either continuously or at a time-to-time basis or on demand, i.e., a user explicitly triggers this operation at any point in time. In another embodiment, system 200 or the linking engine 210 scans system S1 for synchronized asset data aspects ADA with their respective asset identifiers AID. In another embodiment, the source systems or system S1 notify updates on its local data stores to system 200 or the linking engine 210, e.g., via a notification channel, message broker, etc. and the sink systems integrate the data mutation according to a local update routine. Another possibility would be that the sink system S1 or system 200 or the linking engine 210 that is interested in data from the source systems periodically poll the source systems for updates. If the source system has received new mutations, it responds with all updated data entities. As a result, a collection of unlinked asset data aspects from different source systems 110, 120, 130 is ingested into system 200 or the linking engine 210.

In a next step, the linking engine 210 calls the recommendation engine 220 to generate linking recommendations LR. The purpose of the recommendation engine is to analyze properties from all available asset data sets, especially the asset data aspects ADA with their asset identifiers AID, and make suggestions on which aspects are likely to belong together based on asset data aspect similarities.

One exemplary embodiment of a computer-implementable method to generate linking recommendations LR (step 310 in Fig. 3) would be the following:

1. A similarity matrix $M_S^A$ for an input set of asset data aspects $A = \{a^1, ..., a^n\}$ is calculated. The matrix represents the similarity between any pair of asset data aspects $(a^i, a^j) \in A$, represented as similarity scores $s^{i,j}$, where $s^{i,j} \in [0,1]$, i.e., the similarity score is normalized to values in the interval between 0 and 1, where 0 means no similarity, and 1 means that the elements of the pair are equal. In the following example, only the asset identifiers of the data sets of the asset data aspects are taken into account for the calculation of the similarity score. One method to calculate such a similarity score of two asset identifiers is the Levenshtein distance. For the similarity approach in general, other string distance algorithms could be used, or a trained neural network model, or a combination of approaches with a mean/median score.

|  | tag_123 | xx.123 | Pump123 | tag_456 | xx.456 | Valve456 | tag_789 | xx.789 | Motor780 |
|---|---|---|---|---|---|---|---|---|---|
| tag_123 | - | - | - | - | - | - | - | - | - |
| xx.123 | 0,98 | - | - | - | - | - | - | - | - |
| Pump123 | 0,97 | 0,96 | - | - | - | - | - | - | - |
| tag_456 | 0,4 | 0,3 | 0,3 | - | - | - | - | - | - |
| xx.456 | 0,2 | 0,2 | 0,1 | 0,98 | - | - | - | - | - |
| Valve456 | 0,1 | 0,2 | 0,1 | 0,97 | 0,96 | - | - | - | - |
| tag_789 | 0,4 | 0,3 | 0,2 | 0,2 | 0,3 | 0,2 | - | - | - |
| xx.789 | 0,2 | 0,2 | 0,1 | 0,3 | 0,1 | 0,1 | 0,97 | - | - |
| Motor780 | 0,1 | 0,2 | 0,1 | 0,1 | 0,2 | 0,2 | 0,7 | 0,7 | - |

The table above illustrates an example for the calculation of similarity scores, if only the asset identifiers of the asset data aspects of system S1 are considered. In the upper horizontal line and in the first column all local asset identifiers from different source systems (compare 110, 120 and 130 of Fig. 1) are listed. The highest similarity scores are marked. In general, a pair of asset data aspects ($a^i$, $a^j$) with $a^i$, $a^j \in A$, is similar, if the corresponding entry

$$(i, j) \in M_S^A$$

, i.e., the associated score $s^{i,j}$ is greater than a similarity threshold $T^s$. Therefore, $T^s$ is a tunable parameter in the recommendation engine 220.

2. The similarity matrix is filtered for pairs with similarity scores which are higher than a predefined threshold and the most similar asset data aspects are grouped. In the described example, threshold $T^s$ might be selected to be 0,9, which leads to the following set $C^S$:

$$= \left\{ \begin{array}{c} \langle \text{tag\_123}, "xx.123" \rangle, \langle \text{tag\_123}, "Pump123" \rangle, \langle \text{xx.123}, "Pump123" \rangle, \\ \langle \text{tag\_456}, "xx.456" \rangle, \langle \text{tag\_456}, "Valve456" \rangle, \langle \text{xx\_456}, "Valve456" \rangle, \\ \langle \text{tag\_789}, "xx.789" \rangle \end{array} \right\}$$

3. In this example, each asset identifier $c \in \langle c^i, c^j \rangle \in C^s$ of a group of the set $C^S$ is assigned a randomly generated unique linked asset identifier. In general, each asset data aspect $c \in \langle c^i, c^j \rangle \in C^S$ of a group of the set $C^S$ is assigned a randomly generated unique linked asset identifier. A linked asset identifier shall be defined here to be a unique identifier to represent a set of asset data aspects that belong together (=group). In this example, this leads to the following Linked Asset Identifier Map $M^{ID}$ :

| Asset Identifier | Linked Asset Identifier |
|---|---|
| tag_123 | 1c08dbe8 |
| xx. 123 | 1c08dbe8 |
| Pump123 | 1c08dbe8 |
| tag_456 | 183e3cb6 |
| xx.456 | 183e3cb6 |
| Valve_456 | 183e3cb6 |
| tag_789 | 525ed410 |
| xx.789 | 525ed410 |

The Linked Asset Identifier Map $M^{ID}$ can be further reduced to $M^{LR}$, the Linking Recommendations Map 225, that maps each Linked Asset Identifier occurring in $M^{ID}$ to all related asset data aspects (=asset identifiers in this example). In this example, this leads to the following Linking Recommendations Map $M^{LR}$:

| Linked Asset identifier | Linking Recommendation |
|---|---|
| 1c08dbe8 | tag_123, xx.123, Pump123 |
| 183e3cb6 | tag_456, xx.456, Valve_456 |
| 525ed410 | tag_789, xx.789 |

The Linking Recommendations Map $M^{LR}$ 225 is returned to the Linking Engine 210 as linking recommendation LR. The form of linking recommendations LR, however, is not limited to a table or map as shown in this example. Linking recommendations LR may be any collection of asset data aspects that share commonalities such as similar asset identifiers or similarities on other properties or data attributes, which may indicate that these asset data aspects belong to the same real-world asset. A collection of asset data aspects may be assigned to one identifier as shown in this example.

Finally, the linking recommendations LR may be returned from the recommendation engine 220 to the linking engine 210. There, the linking recommendations LR are output for inspection based on expert knowledge, and for approval/denial or modification of the linking recommendation by erasing or adding asset data aspects (step 320 in Fig. 3). "Outputting" in this context means either that the linking recommendations LR are presented to another algorithm for inspection or that the linking recommendations LR are presented to a user by the means of a graphical user interface. In the first case, the linking recommendations may be presented to a suitable logic or artificial intelligence for inspection, which might be a neural network module or a comparison module, which is configured to compare the recommendations to historic linking recommendations. Each computer-implemented means allowing a decision making can be implemented in this case.

In the second case, the linking recommendations LR are output on a graphical user interface of a client computer or any computing display device or as software requesting information to access a service made available by a server which hosts at least system 200. The client may have respective components to display information or data on a graphical user interface as output. Thus, the graphical user interface allows the user to interact with the inventive system 200 through graphical icons or command-line interfaces as text windows by using for example a keyboard or similar device for data or information input. Thus, the graphical user interface may be configured to receive queries from a user such as a technical expert with the necessary domain knowledge. The expert user can visually browse the linking recommendations LR, which displays the identifiers that reached the similarity calculation threshold. In the graphical user interface, the expert user can inspect these recommendations, and validate them based on the associated aspect data to confirm if the recommendation for linking aligns with the expert knowledge. In addition, a linking recommendation may actively be accepted or denied or modified by either adding further asset data aspects or removing them. In Fig. 2, for example, the asset data aspect with the asset identifier "Motor780" is not included in the linking recommendation table 225. Therefore, a user may add it to the linked asset identifier "525ed410". If the user agrees with the linking recommendations LR, the recommendation 225 can be used to determine a combined asset representation for integration into a sink system or to extend a linking database or to create a linking knowledge base which will be transferred to a persistent storage like for example a knowledge graph.

Once, a final linking recommendation FLR is released (step 330 in Fig. 3), either system 200 or the linking engine 210 or another engine (not shown) generates a new combined asset representation (CAR), adds the asset data aspects to the CAR, and assigns the linked asset identifier, which is then used to represent a holistic view of the asset.

In Fig. 2, the state of the linked asset data aspects ADA of system S1 is shown at a timestamp t2 (S1@t2). All relating asset data aspects ADA with their respective asset identifiers AID are assigned to one linked asset identifier, thus constituting a combined asset representation CAR. One possibility for a combined asset representation CAR may be a knowledge graph or any other database (e.g., a relational database or a document database). Depending on the uses case, either the final linking recommendations FLR or the combined asset representation CAR or both may be transferred to a sink system (like here S1) for integration into another application (compare Fig. 3, Step 330).

In an approach for a fully automated linking of asset data aspects (inspection executed by an engine, logic or AI), the role of the expert user becomes less important. Instead of actively reviewing and acknowledging the linking recommendations before the linking happens, the fully automated linking approach will directly apply the linking recommendations to create the combined asset representations. Alternatively, the linking engine may provide the expert user with an optional functionality to undo a fully automated linking at a later point in time. This option is supposed to correct infrequently occurring erroneous linkings.

All in all, in can be stated that the combination of a recommender that provides linking suggestions and a UI support that allows the expert user to browse asset aspect data and accept suggestions with a single click significantly speeds up the linking process. Because asset data aspects and combined asset representation are physically integrated, i.e., stored in dedicated sink system, the linking results can be leveraged by multiple consuming applications such as analytics engines. Because the recommendation engine checks similarity between some key properties in data aspects, this similarity can be used as an indicator to inform users about potential inconsistencies, e.g., when a serial number should be strictly identical, but actually isn't identical due to a typo, a notification can be generated. When data aspects have been linked in a combined asset representation CAR, the UI can present all aspects together, but still show which properties originated from which aspect. This saves the user time because all information about an asset is easily reached.

Finally, a better linking will lead to an optimization of the process run in connection with the assets. The linked data may be incorporated into a diagnostic tool of an automation software of a process plant or a factory automation plant finally optimizing the plant operation. They also may be used for generating training data for machine learning models which might allow a better control or operation of a technical plant.

**Claims**

1. Computer-implemented method for intelligent linking of data associated with an asset, the method comprising the following steps:

   - receiving (305) unlinked asset data sets of different asset data aspects from different source systems (110, 120, 130),
   - generating (310) linking recommendations (LR) based on asset data aspect similarities, which are calculated after an analysis of properties of asset data aspects, grouping similar asset data aspects, assigning each asset data aspect of a group to a unique linked asset identifier thus producing a recommendation that maps each linked asset data aspects to all related asset data aspects,
   - outputting (315) the linking recommendations (LR) for inspection based on expert knowledge, and for approval/denial or modification of the linking recommendation by erasing or adding asset data aspects,
   - release (320) of a final linking result (FLR) with linked asset identifiers as basis for generation of a combined asset representation for integration into a sink system (S1).

2. The method of claim 1, wherein the calculated linking recommendations are output on a graphical user interface, which guides a technical expert to select, approve, deny or modify the recommendation to execute final linking operations.

3. The method of claim 2, wherein the calculated linking recommendations are inspected by a logic or artificial intelligence.

4. The method of claim 1, 2 or 3, wherein the linking recommendation of step 310 is generated fully automatic based on a neural network which is trained for calculating similarities across different asset data aspects, grouping similar asset data aspects and assigning each asset data aspect of a group to a unique linked asset identifier.

5. The method of any of the preceding claims, wherein the asset data are related to a real-world asset or/and a virtual asset as digital representation being provided by a digital twin of the asset.

6. A system (200) for intelligent linking of data associated with an asset, the system (200) comprising at least a linking engine (210) and recommendation engine (220),

   - the linking engine (210) comprising at least one interface to a first software system (S1) with asset data sets of different asset data aspects from different source systems, the linking engine (210) being configured to access the first software system (S1) to scan the software system (S1) for unlinked asset data aspects and to transfer the unlinked asset data aspects to the recommendation engine (220)
   - the recommendation engine (220) being configured to generate linking recommendations (LR) based on asset data aspect similarities, which are calculated after an analysis of properties of asset data aspects, grouping similar asset data aspects, assigning each asset data aspect of a group to a unique linked asset identifier thus producing a recommendation that maps each linked asset data aspects to all related asset data aspects,
   - the linking engine (210) further being configured to receive the calculated linking recommendations (LR) of the recommendation engine (220) for inspection based on expert knowledge, and for approval/denial or modification of the linking recommendation by erasing or adding asset data aspects, and further being configured to release a final linking result (FLR) with linked asset identifiers as basis for generation of a combined asset representation (CAR) for integration into a second software system (S2).

7. The system of claim 6, wherein the recommendation engine (220) is substituted by a neural network.

8. The system of claim 6 or 7, wherein the linking engine further comprises a graphical user interface, guiding a technical expert to select, approve, deny or modify the shown calculated linking recommendation to execute final linking operations.

9. The system of claim 6 to 8 wherein the calculated linking recommendation is output to a logic or artificial intelligence module for inspection.

10. The system of any of the preceding system claims, wherein the asset data are related to a real-world asset or/and a virtual asset as digital representation being provided by a digital twin of the asset.

11. The system of any of the preceding system claims, wherein the first software system (S1) and the second software system (S2) are equal.

12. A computer program product comprising instructions that, when loaded into a memory of a computing device and executed by at least one processor of the computing device, execute the method steps of the computer implemented method according to any one of the claims 1 to 5.

EP 4 586 164 A1

FIG 1

| Id: Tag_123 | ~117 |
| Asset with Engineering Data Aspect | ~118 |

| Id: xx.123 | ~127 |
| Asset with Production Data Aspect | ~128 |

| 137~ Id: Pump123 |
| 138~ Asset with Maintenance Data Aspect | ~S1 |

Engineering ~110

Production ~120

130~ Maintenance

| ID | asset before | asset after |
|---|---|---|
| Tag_123 | Tag_456 | Tag_789 |
| Tag_456 | Tag_000 | Tag_123 |

115

| ID | temp in | open/closed cycles |
|---|---|---|
| xx.123 | 23.5°C | 873591 |
| xx.456 | 33.2°C | 741932 |

125

| ID | last maintenance | planned maintenance |
|---|---|---|
| Pump123 | 2001 | 2023 |
| Valve456 | 2002 | 2024 |

135

FIG 2

| Linked Asset Identifier | Linking Recommendation |
|---|---|
| 1c08dbe8 | Tag_123, xx.123, Pump123 |
| 183e3cb6 | Tag_456, xx.456, Valve456 |
| 525ed410 | Tag_789, xx.789, |

220 — 225 — 200

$I_{X1}$   $I_{XN}$   LR

210   $I_1$   $I_N$

S1@t1

| Id: Tag_123 | Id: xx.123 | Id: Pump123 |
|---|---|---|
| Asset with Engineering Data Aspect | Asset with Production Data Aspect | Asset with Maintenance Data Aspect |
| Id: Tag_456 | Id: xx.456 | Id: Valve456 |
| Asset with Engineering Data Aspect | Asset with Production Data Aspect | Asset with Maintenance Data Aspect |
| Id: Tag_789 | Id: xx.789 | Id: Motor780 |
| Asset with Engineering Data Aspect | Asset with Production Data Aspect | Asset with Maintenance Data Aspect |

AID — ADA

S1@t2

Id: 525ed410 — Combined Asset Representation — CAR

CAR

Id: 1c08dbe8 — Combined Asset Representation

Id: Tag_789 — Asset with Engineering Data Aspect

Id: xx.789 — Asset with Production Data Aspect

Id: Motor780 — Asset with Maintenance Data Aspect

Id: 183e3cb6 — Combined Asset Representation — CAR

Id: Tag_123 — Asset with Engineering Data Aspect

Id: xx.123 — Asset with Production Data Aspect

Id: Pump123 — Asset with Maintenance Data Aspect

Id: Tag_456 — Asset with Engineering Data Aspect

Id: xx.456 — Asset with Production Data Aspect

Id: Valve 456 — Asset with Maintenance Data Aspect

# FIG 3

300

305

310

LR

320

330 → FLR

CAR

Europäisches
Patentamt

European
Patent Office

Office européen
des brevets

# EUROPEAN SEARCH REPORT

**Application Number**

EP 24 15 1782

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/147509 A1 (MUDDU KARTHIK KARL [US] ET AL) 12 May 2022 (2022-05-12) * paragraphs [0031], [0046], [0047], [0049], [0050], [0053] - [0060], [0070], [0074]; claim 1 * | 1-12 | INV. G06Q10/067 |

TECHNICAL FIELDS SEARCHED (IPC)

G06Q

The present search report has been drawn up for all claims

| Place of search | Date of completion of the search | Examiner |
|---|---|---|
| Munich | 30 June 2024 | Haitof, Houssam |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 15 1782

This annex lists the patent family members relating to the patent documents cited in the above-mentioned European search report.
The members are as contained in the European Patent Office EDP file on
The European Patent Office is in no way liable for these particulars which are merely given for the purpose of information.

30-06-2024

| Patent document cited in search report | Publication date | Patent family member(s) | Publication date |
|---|---|---|---|
| US 2022147509 A1 | 12-05-2022 | US 2022147509 A1 | 12-05-2022 |
| | | WO 2022082095 A1 | 21-04-2022 |

EPO FORM P0459

For more details about this annex : see Official Journal of the European Patent Office, No. 12/82